# EUROPEAN PATENT SPECIFICATION

(11) **EP 2 186 919 B1**
(45) Date of publication and mention of the grant of the patent: **26.06.2013**
(21) Application number: 09710276.8
(22) Date of filing: 03.02.2009
(51) Int. Cl.: C23C 28/00, C23C 30/00, C04B 35/495, C23C 4/10

(54) **HEAT-SHIELDING COATING MATERIAL**
WÄRMEAABSCHIRMENDES BESCHICHTUNGSMATERIAL
MATÉRIAU DE REVÊTEMENT DE BLINDAGE THERMIQUE

(30) Priority: 12.02.2008 JP 2008030935; 17.03.2008 JP 2008067890
(43) Date of publication of application: 19.05.2010
(73) Proprietor: Mitsubishi Heavy Industries, Ltd., Tokyo 108-8215 (JP)
(72) Inventor: NAGANO, Ichiro, Takasago-shi Hyogo 676-8686 (JP); TORIGOE, Taiji, Takasago-shi Hyogo 676-8686 (JP); AKIYAMA, Katsunori, Takasago-shi Hyogo 676-8686 (JP); SHIDA, Masato, Takasago-shi Hyogo 676-8686 (JP); MORI, Kazutaka, Takasago-shi Hyogo 676-8686 (JP); TSURU, Yasuhiko, Takasago-shi Hyogo 676-8686 (JP); OKADA, Ikuo, Takasago-shi Hyogo 676-8686 (JP)
(74) Representative: Henkel, Breuer & Partner
(86) International application number: PCT/JP2009/051785
(87) International publication number: WO 2009/101876

(56) References cited:
- EP-A1- 1 607 379
- JP-A- 2006 298 695
- JP-A- 2006 298 695

## Description

### Technical Field

The present invention relates to a thermal barrier coating material that can be applied to equipment components used in high-temperature environments, such as a rotor blade, stator vane or combustor of a gas turbine used for electric power generation, or a jet engine.

### Background Art

In order to increase the efficiency of gas turbines and jet engines and the like, the temperature of the combustion gas continues to be increased. In order to protect metal components from these high temperature (for example, in a 1700°C class gas turbine, the maximum blade surface temperature reaches approximately 1350°C), a thermal barrier coating (TBC) is applied to the surface of the components. Examples of the material used for this thermal barrier coating include low thermal conductivity ceramics, including rare earth stabilized zirconia materials such as yttria-stabilized zirconia (YSZ). The thermal barrier coating is applied by using low pressure plasma spraying or the like to form a metal bonding layer on the metal component that represents the substrate, and then applying the thermal barrier coating to the metal bonding layer using atmospheric pressure plasma spraying or the like.

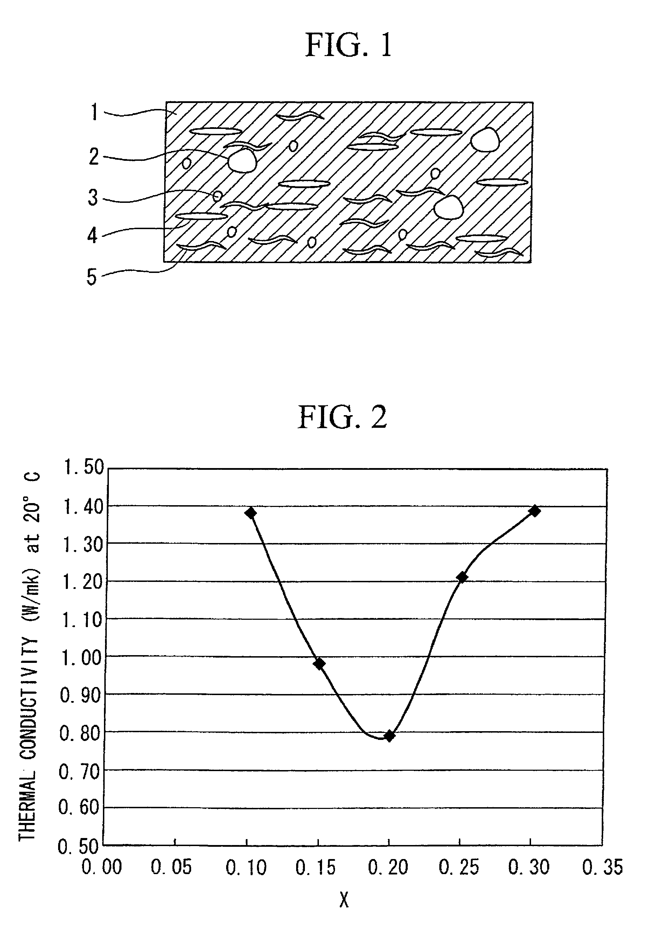

A thermal barrier coating applied to a metal component by atmospheric pressure plasma spraying does not have a dense composition, and includes a multitude of internal pores. FIG. 1 is a schematic illustration of the composition of a thermal barrier coating. As illustrated in FIG. 1, the structure of the thermal barrier coating material 1 contains pores of a variety of shapes, including large pores 2 with diameters of several tens of µm, small pores 3 with diameters of several µm, and narrow-width linear pores 4 and 5. The thermal barrier coating material 1 is itself a ceramic having a low thermal conductivity, but at the same time, the multitude of the above types of pores 2 to 5 that exist inside the material help maintain the thermal insulation performance of the material, and as a result, the metal component that represents the substrate is able to be used in high-temperature environments.

Rare earth stabilized zirconia materials have a thermal conductivity of 2.2 W/mK when evaluated as a dense sintered compact in which the occurrence of pores can be effectively ignored, which represents a low value even amongst ceramic materials. Furthermore, these materials also have a large linear expansion coefficient and a high level of toughness. As a result, rare earth stabilized zirconia materials are ideal as thermal barrier coatings.
In recent years, there has been a growing demand for further improvements in thermal barrier properties, meaning that when a rare earth stabilized zirconia is used as a thermal barrier coating, the thickness of the coating film needs to be increased to further enhance the thermal barrier properties. However, increasing the thickness of the coating film makes the film more susceptible to cracking and peeling. Accordingly, in order to obtain a thermal barrier coating having superior thermal barrier properties without altering the thickness of the coating, the development of materials having even lower thermal conductivity, for example, the development of materials in which the thermal conductivity has been reduced by approximately one half, has been keenly sought.

As an example of a material having a low thermal conductivity, Patent citation 1 discloses a thermal barrier coating material having a low thermal conductivity in which 0.1 to 10 mol% of lanthanum oxide is added to a rare earth stabilized zirconia or a rare earth stabilized zirconia-hafnia.

Patent citation 2 discloses a thermal barrier coating material having a low thermal conductivity that comprises mainly a compound represented by Ln₃Nb₁₋ₓTaₓO₇ (wherein 0≤x≤1 and Ln represents one or more elements selected from the group consisting of Sc, Y and the lanthanoid elements).
Patent Citation 1: Japanese Unexamined Patent Application, Publication No. 2004-270032
Patent Citation 2: Japanese Unexamined Patent Application, Publication No. 2006-298695

### Disclosure of Invention

The thermal barrier coating material of Patent Citation 2 undergoes no phase transition from room temperature through to high temperatures, and exhibits good phase stability at operating temperatures. Further, it has a melting point that is similar to, or higher than, that of a rare earth stabilized zirconia, and has a lower thermal conductivity than rare earth stabilized zirconia materials. Accordingly, it is very desirable as a thermal barrier coating material. However, in order to achieve even higher thermal barrier performance, thermal barrier coating materials that exhibit even lower thermal conductivity are required.

The present invention has been developed in order to address the issues outlined above, and has an object of providing a thermal barrier coating material with a thermal conductivity that is lower than that of a rare earth stabilized zirconia.

As a result of intensive research aimed at achieving the above object, the inventors of the present invention discovered that a compound represented by either Ln₁₋ₓTaₓO_{1.5+x} or Ln₁₋ₓNbₓO_{1.5+x} (wherein Ln represents one or more elements selected from the group consisting of Sc, Y and the lanthanoid elements), in which 0.13≤x≤0.24, exhibited a linear expansion coefficient that was similar to that of a rare earth stabilized zirconia, and also had a low thermal conductivity. Moreover, they also discovered that when the average ion radius r of Ln satisfied r<1.04 A, the compound underwent no phase transition from high temperatures down to low temperatures (room temperature), and yielded a thermal barrier coating having excellent stability from a mechanical strength perspective.

In other words, the present invention provides a thermal barrier coating material consisting of a compound represented by composition formula (1):

Ln₁₋ₓTaₓO_{1.5+x}

(wherein 0.18≤x≤0.22, and Ln represents one or more elements selected from the group consisting of Sc, Y and the lanthanoid elements).

Furthermore, the present invention also provides a thermal barrier coating material consisting a compound represented by composition formula (2):

Ln₁₋ₓNbₓO_{1.5+x}

(wherein 0.18≤x≤0.22, and Ln represents one or more elements selected from the group consisting of Sc, Y and the lanthanoid elements).

The compound represented by composition formula (1) or composition formula (2) has increased phonon scattering as a result of disordering caused by oxygen defects, and as a result, the thermal conductivity is lower than that of a conventional rare earth stabilized zirconia. Accordingly, unlike conventional rare earth stabilized zirconia materials, there is no necessity to increase the film thickness in order to improve the thermal barrier properties, and even with a film thickness similar to that of existing films, a thermal barrier coating can be obtained that has superior thermal barrier properties to a rare earth stabilized zirconia.

By ensuring that x≤0.24, a larger number of oxygen defects is introduced than conventional compounds such as Ln₃TaO₇ and Ln₃NbO₇ (x=0.25), and as a result the phonon scattering effect is enhanced and the thermal conductivity is further reduced. However, if x<0.13 then the solid solution limit is exceeded and Ln₂O₃ precipitates, resulting in an increase in the thermal conductivity. Consequently, the value of x is set so as to satisfy 0.18≤x≤0.22.

In the present invention, the average ion radius of Ln mentioned above is preferably less than 1.04 Å. When the average ion radius of Ln is less than 1.04 A, the compound of composition formula (1) or composition formula (2) exhibits no phase transition from high temperatures down to low temperatures (room temperature). As a result, even in those situations where the temperature undergoes a rapid change, such as when a turbine is stopped, the type of rapid change in volume that accompanies a phase transition does not occur, meaning cracking or peeling of the thermal barrier coating can be prevented. In the present invention, the values for the ion radii are as reported by R.D. Shannon in Acta Crystallogr., A32, 751 (1976).

The thermal barrier coating material of the above aspects of the present invention refers to both the thermal barrier coating material used as a raw material, and the thermal barrier coating formed on the surface of an equipment component.

An equipment component comprising the thermal barrier coating material described above is coated with a thermal barrier coating that exhibits excellent thermal barrier properties and is resistant to cracking and peeling even when exposed to rapid temperature change, and is therefore an equipment component that can withstand use at high temperatures. Examples of the equipment component include a rotor blade, stator vane or combustor of a gas turbine used for electric power generation, or a jet engine.

Furthermore, as a result of further research aimed at achieving the above object, the inventors of the present invention also discovered that of the compounds represented by Ln₃NbO₇ (wherein Ln represents one or more elements selected from the group consisting of Sc, Y and the lanthanoid elements), cubic compounds having a fluorite structure exhibited a similar linear expansion coefficient to rare earth stabilized zirconia materials, and also had a low thermal conductivity. Moreover, they also discovered that the crystal structure of a compound represented by Ln₃NbO₇ varied depending on the average ion radius of the rare earth elements Ln arithmetically averaged for the respective molar fractions, and that a compound Ln₃NbO₇ in which the Ln average ion radius r satisfied 1.01 Å ≤r≤ 1.053 Å adopted a fluorite structure that had a lower thermal conductivity. The values for the ion radii are as reported by R.D. Shannon in Acta Crystallogr., A32, 751 (1976).

In other words, described heirein is also a thermal barrier coating material comprising mainly a cubic compound having a fluorite structure represented by composition formula (3):

Ln₃NbO₇

(wherein Ln represents one or more elements selected from the group consisting of Sc, Y and the lanthanoid elements).
In this manner, a cubic compound having a fluorite structure represented by composition formula (3) has increased phonon scattering as a result of disordering caused by oxygen defects, and as a result, the thermal conductivity is lower than that of a conventional rare earth stabilized zirconia.

In this case, provided the aforementioned Ln average ion radius r satisfies 1.01 A ≤r≤ 1.053 Å, and preferably 1.032 Å ≤r≤ 1.048 Å, the compound represented by composition formula (3) adopts a fluorite structure, and a thermal barrier coating material comprising the compound represented by composition formula (3) has a lower thermal conductivity.

The margin of error in the thermal conductivity is assumed to be ±0.1 W/mK, and therefore provided the thermal conductivity of the compound Ln₃NbO₇ is not more than 1.2 W/mK, a thermal barrier coating material having a thermal conductivity that is 1/2 of that of a conventional rare earth stabilized zirconia can be achieved. Accordingly, when such a compound is used as a thermal barrier coating, unlike conventional rare earth stabilized zirconia materials, there is no necessity to increase the film thickness in order to improve the thermal barrier properties, and even with a film thickness similar to that of existing films, a thermal barrier coating can be obtained that has superior thermal barrier properties to a rare earth stabilized zirconia.

The thermal barrier coating material of this aspect described herein refers to both the thermal barrier coating material used as a raw material, and the thermal barrier coating formed on the surface of an equipment component.

According to the present invention, because the thermal barrier coating material consists of a compound represented by the above composition formula (1) or composition formula (2), the thermal conductivity can be reduced compared to that of conventional rare earth stabilized zirconia materials. As a result, a thermal barrier coating film can be provided that exhibits improved thermal barrier properties and is resistant to cracking and peeling. Using the thermal barrier coating material of the present invention, for example, in a 1700°C class gas turbine, improves the durability of metal members under high-temperature conditions, meaning the efficiency of the gas turbine can be increased.

### Brief Description of Drawings

[FIG. 1] A schematic illustration of the composition of a thermal barrier coating.
[FIG. 2] A graph illustrating the relationship between the value of x in the composition formula Yb₁₋ₓTaₓO_{1.5+x} and the thermal conductivity.
[FIG. 3] A graph illustrating the relationship between the value of x in the composition formula Y₁₋ₓTaₓO_{1.5+x} and the thermal conductivity.
[FIG. 4] A graph illustrating the relationship between the Ln average ion radius and the thermal conductivity.

### Explanation of Reference:

1: Thermal barrier coating material
2: Large pore with diameter of several tens of µm
3: Small pore with diameter of several µm
4: Linear pore
5: Linear pore

### Best Mode for Carrying Out the Invention

A first embodiment of a thermal barrier coating of the present invention is described below.

The thermal barrier coating material of this embodiment of the present invention consists of a compound represented by either Ln₁₋ₓTaₓO_{1.5+x} or Ln₁₋ₓNbₓO_{1.5+x}. Ln represents one or more elements selected from the group consisting of Sc, Y and the lanthanoid elements (La, Ce, Pr, Nd, Pm, Sm, Eu, Gd, Tb, Dy, Ho, Er, Tm, Yb and Lu).

A compound represented by Ln₁₋ₓTaₓO_{1.5+x} or Ln₁₋ₓNbₓO_{1.5+x} exhibits a lower thermal conductivity than a conventional rare earth stabilized zirconia. It is thought that this is because disordering caused by oxygen defects within the structure results in increased phonon scattering. Particularly in those cases where the value of x satisfies 0.13≤x≤0.24, the Ln and the Ta or Nb undergo solid dissolution, resulting in a further increase in oxygen defects and increased disorder, meaning a thermal barrier coating material with a low thermal conductivity can be obtained. The value of x satisfies 0.18≤x≤0.22, as such values enable the thermal conductivity to be reduced even further.

The crystal structure of Ln₁₋ₓTaₓO_{1,5+x} or Ln₁₋ₓNbₓO_{1,5+x} in those cases where the Ln average ion radius r satisfies r<1.04 Å undergoes no phase transition from high temperatures down to low temperatures. As a result, even in those cases where the temperature undergoes a rapid change, such as when a device that is operating at a high temperature is stopped, the type of rapid change in volume that accompanies a phase transition does not occur, meaning cracking or peeling of the thermal barrier coating can be prevented.

Examples of elements that satisfy r<1.04 Å include Lu, Yb, Tm, Er, Ho and Y. In particular, Yb, Er and Y are elements with a large Clarke number, and are therefore ideal for the thermal barrier coating material. Ln within the composition formula (1) or composition formula (2) may be either one element selected from among Lu, Yb, Tm, Er, Ho and Y, or a combination of two or more of these elements. Alternatively, one or more elements may be selected from among Lu, Yb, Tm, Er, Ho and Y, and then combined with one or more elements selected from elements that satisfy r≥1.04 Å. In such cases, the compositional ratio between the elements must be set appropriately so that the average ion radius r of the selected elements satisfies r<1.04 Å.

A thermal barrier coating comprising a compound represented by composition formula (1) or composition formula (2) is formed on a metal component (an equipment component) by an atmospheric pressure plasma spraying method or an electron beam deposition method, with a metal bonding layer disposed therebetween. Increasing the thickness of the thermal barrier coating is effective in improving the thermal barrier properties, but makes the thermal barrier coating more susceptible to cracking and peeling. Accordingly, the thickness of the thermal barrier coating is typically within a range from approximately 0.3 to 0.5 mm. The compound represented by composition formula (1) or composition formula (2) has a low thermal conductivity, and therefore yields a thermal barrier coating having superior thermal barrier coating properties that can withstand use in high-temperature environments even without increasing the thickness of the coating.

The present invention is described in more detail below based on an example 1, although the present invention is in no way limited by this example.

### (Example 1)

Powders of Ta₂O₅, Yb₂O₃ and Y₂O₃ were used as raw material powders, and these powders were weighed so as to achieve the desired composition, and subsequently subjected to solid phase mixing using a ball mill. The mixed powder was dried and then pre-calcined at 1,400°C. Identification of the pre-calcined powder by powder X-ray diffraction revealed no residual unreacted raw material components, and confirmed that a single phase had been obtained in all of the samples.

Each sample was calcined at 1,600°C, a circular disk-shaped specimen having a diameter of 10 mmø and a thickness of 1 mm was cut from the resulting sintered compact, and a laser flash method was used to measure the thermal conductivity.

FIG. 2 illustrates the relationship between the composition of Yb₁₋ₓTaₓO_{1.5+x}. and the thermal conductivity. In FIG. 2, the horizontal axis represents the value of x in the composition formula Yb₁₋ₓTaₓO_{1.5+x}, and the vertical axis represents the thermal conductivity. The thermal conductivity reached a minimum (approximately 0.8 W/mK) in the vicinity of x=0.2. In the region 0.13≤x≤0.24, the thermal conductivity was not more than 1.1 W/mK, a value which is less than half the thermal conductivity of conventional YSZ, and was also lower than the thermal conductivity of Yb₃TaO₇, (x=0.25). In particular, a thermal conductivity of 1.0 W/mK or less was achieved for 0.15≤x≤0.23, and a thermal conductivity of 0.9 W/mK or less was achieved for 0.18≤x≤0.22.

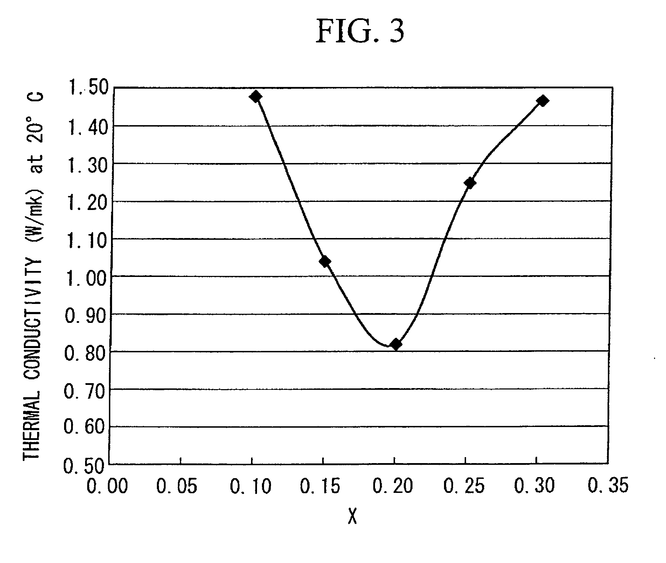

FIG. 3 illustrates the relationship between the composition of Y₁₋ₓTaₓO_{1.5+x} and the thermal conductivity. In FIG. 3, the horizontal axis represents the value of x in the composition formula Y₁₋ₓTaₓO₁₋₅₊ₓ, and the vertical axis represents the thermal conductivity. In the same manner as that described for the compound Yb₁₋ₓTaₓO_{1.5+x}, the thermal conductivity reached a minimum (approximately 0.8 W/mK) in the vicinity of x=0.2, and a thermal conductivity of 1.1 W/mK or less was achieved in the region 0.13≤x≤0.24.

The average linear expansion coefficients for the compound Yb₁₋ₓTaₓO_{1.5+x}, the compound Y_{1-X}TaₓO_{1.5+x}, and a YSZ (ZrO₂ containing 8 mol% of added Y₂O₃) as a comparative example are listed in Table 1.

**[Table 1]**

| SAMPLE NAME | AVERAGE LINEAR EXPANSION COEFFICIENT (1/K) RT TO 1, 000°C |
|---|---|
| ZrO₂-8 mol% Y₂O₃ | 1.02 × 10⁻⁵ |
| Yb_{0.8}Ta_{0.2}O_{1.7} | 1.00 × 10⁻⁵ |
| Y_{0.8}Ta_{0.2}O_{1.7} | 1.01 × 10⁻⁵ |

The compounds of the present invention exhibited similar linear expansion coefficients to the conventional YSZ.

Nb is an element from the same group as Ta, and therefore a compound represented by the composition formula Ln₁₋ₓNbₓO_{1.5+x} also exhibits a low thermal conductivity when x satisfies 0.13≤x≤0.24, and has a similar linear expansion coefficient to conventional YSZ.

A second embodiment of a thermal barrier coating material is described below.

The thermal barrier coating material of this embodiment comprises mainly a compound represented by composition formula (3) above. Ln represents one or more elements selected from the group consisting of Sc, Y and the lanthanoid elements (La, Ce, Pr, Nd, Pm, Eu, Gd, Tb, Dy, Ho, Er, Tm, Yb and Lu).

The compound Ln₃NbO₇ undergoes a change in crystal structure depending on the average ion radius r of Ln. The average ion radius r for Ln is determined by arithmetically averaging the ion radii of each of the elements that constitute Ln in accordance with their respective molar fractions. When this Ln average ion radius r is 1.053 Å or greater, the compound Ln₃NbO₇ adopts an orthorhombic crystal structure, whereas when the Ln average ion radius r is less than 1.053 Å, the compound adopts a cubic system having a fluorite structure.

A cubic Ln₃NbO₇ having a fluorite structure exhibits a lower thermal conductivity than conventional rare earth stabilized zirconia materials. It is thought that this is because disordering caused by oxygen defects within the structure results in increased phonon scattering. In those cases where Ln is composed of two or more elements, this disordering is increased even further. This results in an additional increase in phonon scattering, and is therefore effective in achieving a thermal barrier coating material with a low thermal conductivity.

When the Ln average ion radius r satisfies 1.01 Å ≤r< 1.053 Å, the compound Ln₃NbO₇ exhibits particularly low thermal conductivity and yields a coating material with excellent thermal barrier properties, and such compounds are therefore preferred. Moreover, if the Ln average ion radius r satisfies 1.032 Å ≤r< 1.048 Å, then the thermal conductivity of the compound Ln₃NbO₇ is not more than 1.1 W/mK, a value which is less than 1/2 the thermal conductivity of conventional YSZ, and such compounds are therefore particularly suitable as thermal barrier coating materials.

A thermal barrier coating comprising a compound Ln₃NbO₇ is formed on a metal component (an equipment component) by an atmospheric pressure plasma spraying method or an electron beam deposition method, with a metal bonding layer disposed therebetween. Increasing the thickness of the thermal barrier coating is effective in improving the thermal barrier properties, but makes the thermal barrier coating more susceptible to cracking and peeling, and therefore the thickness of the thermal barrier coating is typically within a range from approximately 0.3 to 0.5 mm. Provided the thermal conductivity of the compound Ln₃NbO₇
is not more than 1.2 W/mK, a thermal barrier coating having superior thermal barrier coating properties that can withstand use in high-temperature environments can be obtained without increasing the thickness of the coating.

The second embodiment is described in more detail below based on an example 2.

### (Example 2)

The elements corresponding with Ln and the respective proportions of those elements were selected so that the Ln average ion radius was less than 1.053 Å. Powders of Nb₂O₅, SC₂O₃, Y₂O₃ and trivalent lanthanoid oxides (such as La₂O₃ and Ce₂O₃) were used as raw material powders, and these powders were weighed so as to achieve the desired composition, and subsequently subjected to solid phase mixing using a ball mill. The mixed powder was dried and then pre-calcined at 1,400°C. Identification of the pre-calcined powder by powder X-ray diffraction revealed no residual unreacted raw material components, and confirmed that a single phase had been obtained in all of the samples.

Each sample was calcined at 1,600°C, a circular disk-shaped specimen having a diameter of 10 mmø and a thickness of 1 mm was cut from the resulting sintered compact, and a laser flash method was used to measure the thermal conductivity.

### (Comparative example)

The elements corresponding with Ln and the respective proportions of those elements were selected so that the Ln average ion radius was at least 1.053 A. Samples were then prepared in the same manner as example 2, and the samples were then identified by powder X-ray diffraction and measured for thermal conductivity using a laser flash method.

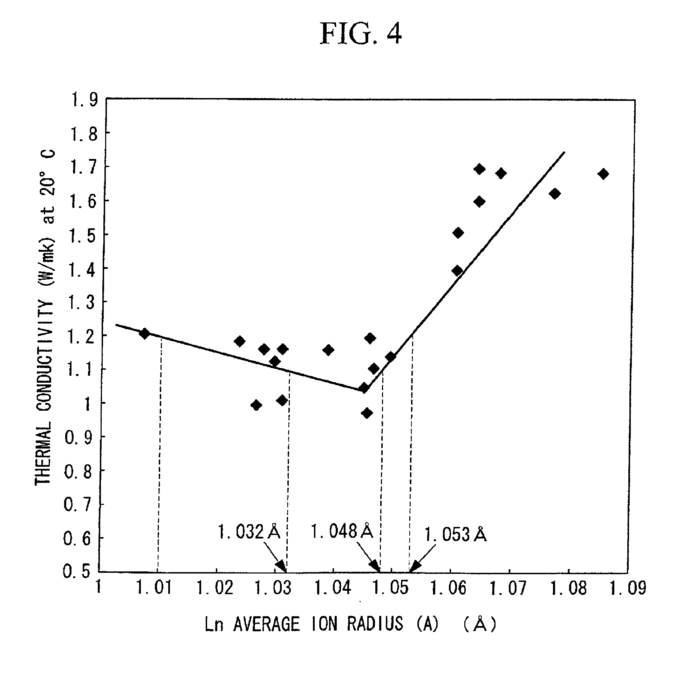

For each of the samples prepared in example 2 and the comparative example, the Ln average ion radius, the crystal structure and the thermal conductivity are listed in Table 2. For the purposes of comparison, the thermal conductivity for yttria-stabilized zirconia (YSZ) is also included in Table 2.
Further, the relationship between the Ln average ion radius and the thermal conductivity is illustrated in FIG. 4.

**[Table 2]**

| | SAMPLE NAME | AVERAGE ION RADIUS (Å) | CRYSTAL STRUCTURE | THERMAL CONDUCTIVITY λ (W/mK) (at 20°C) |
|---|---|---|---|---|
| EXAMPLE * | Yb₃NbO₇ | 1.008 | FLUORITE | 1.21 |
| | YYb₂NbO₇ | 1.024 | FLUORITE | 1.19 |
| | Nd_{0.5}Yb_{2.5}NbO₇ | 1.027 | FLUORITE | 1.00 |
| | Pr_{0.5}Yb_{2.5}NbO₇ | 1.028 | FLUORITE | 1.16 |
| | Pro_{0.1}Nd_{0.5}Yb_{2.4}NbO₇ | 1.031 | FLUORITE | 1.16 |
| | GdYb₂NbO₇ | 1.031 | FLUORITE | 1.01 |
| | Pr_{0.2}Nd_{0.6}Yb_{2.2}NbO₇ | 1.039 | FLUORITE | 1.16 |
| | Nd_{0.5}Er_{2.5}NbO₇ | 1.046 | FLUORITE | 1.05 |
| | Dy_{2.2}Er_{0.8}NbO₇ | 1.046 | FLUORITE | 0.98 |
| | Gd_{1.64}Yb_{1.36}NbO₇ | 1.046 | FLUORITE | 1.20 |
| | Gd_{0.5}HO_{2.5}NbO₇ | 1.047 | FLUORITE | 1.10 |
| | Nd_{1.2}Lu_{1.8}NbO₇ | 1.050 | FLUORITE | 1.14 |
| COMPARATIVE EXAMPLE | NdEr₂NbO₇ | 1.061 | ORTHORHOMBIC | 1.40 |
| | NdDyYbNbO₇ | 1.061 | ORTHORHOMBIC | 1.51 |
| | Sm₂YbNbO₇ | 1.065 | ORTHORHOMBIC | 1.60 |
| | NdTbYbNbO₇ | 1.065 | ORTHORHOMBIC | 1.70 |
| | NdHo₂NbO₇ | 1.068 | ORTHORHOMBIC | 1.69 |
| | Nd_{0.5}Er_{0.5}Gd₂NbO₇ | 1.078 | ORTHORHOMBIC | 1.63 |
| | Nb₂YbNbO₇ | 1.085 | ORTHORHOMBIC | 1.69 |
| | YSZ | | | 2.2 |

| | | | | |
|---|---|---|---|---|
| * according to the second embodiment | | | | |

As is evident from Table 2, the compounds in which the Ln average ion radius was less than 1.053 Å had a fluorite structure and exhibited a low thermal conductivity of 1.3 W/mK or less. In contrast, the compounds in which the Ln average ion radius was at least 1.053 Å had an orthorhombic crystal structure and exhibited a thermal conductivity of at least 1.4 W/mK that was considerably larger than the values observed for the compounds having a fluorite structure.

Further, as illustrated in FIG. 4, when the Ln average ion radius r satisfied 1.01 Å ≤r< 1.053 Å, a compound with a fluorite structure having a low thermal conductivity could be obtained with good reliability. In particular, when r satisfied 1.032 Å ≤r< 1.048 Å, a thermal conductivity of 1.1 W/mK or less was able to be achieved.

Table 3 lists the average linear expansion coefficients for a compound of example 2 (Nd_{0.5}Yb_{2.5}NbO₇) and YSZ. The compound of example 2 had a similar linear expansion coefficient to that of conventional YSZ.

**[Table 3]**

| SAMPLE NAME | AVERAGE LINEAR EXPANSION COEFFICIENT (1/K) RT To 1,000°C |
|---|---|
| ZrO₂-8Y₂O₃ | 1.02 × 10⁻⁶ |
| Nd_{0.5}Yb_{2.5}NbO₇ | 1.04 × 10⁻⁵ |

If a compound Ln₃NbO₇ having a thermal conductivity of not more than 1.2 W/mK is used for a thermal barrier coating, then a thermal barrier coating with excellent thermal barrier properties is obtained. If this coating is used, for example, in a 1700°C class gas turbine, then the durability of the metal members under high-temperature conditions improves, meaning the efficiency of the gas turbine can be increased.

## Claims

1. A thermal barrier coating material, consisting of a compound represented by a composition formula (1):
Ln₁₋ₓTaₓO_{1.5+x}
wherein 0.18≤x≤0.22, and Ln represents one or more elements selected from the group consisting of Sc, Y and lanthanoid elements.

2. A thermal barrier coating material, consisting of a compound represented by a composition formula (2):
Ln₁₋ₓNbₓO_{1.5+x}
wherein 0.18≤x≤0.22, and Ln represents one or more elements selected from the group consisting of Sc, Y and lanthanoid elements.

3. The thermal barrier coating material according to claim 1, wherein an average ion radius of Ln is less than 1.04 Å.

4. The thermal barrier coating material according to claim 2, wherein an average ion radius of Ln is less than 1.04 Å.

5. An equipment component, comprising the thermal barrier coating material according to any one of claims 1 to 4.

## Patentansprüche

1. Wärmeabschirmendes Beschichtungsmaterial, das aus einer Verbindung der Zusammensetzungsformel (1) besteht:
Ln₁₋ₓTaₓO_{1,5+x}
worin 0,18 ≤ x ≤ 0,22 und Ln für ein oder mehrere Elemente steht, die aus der Gruppe von Sc, Y und Lanthanoidelementen ausgewählt sind.

2. Wärmeabschirmendes Beschichtungsmaterial, das aus einer Verbindung der Zusammensetzungsformel (2) besteht:
Ln₁₋ₓNbₓO_{1,5+x}
worin 0,18 ≤ x ≤ 0,22 und Ln für ein oder mehrere Elemente steht, die aus der Gruppe von Sc, Y und Lanthanoidelementen ausgewählt sind.

3. Wärmeabschirmendes Beschichtungsmaterial nach Anspruch 1, wobei der mittlere Ionenradius von Ln weniger als 1,04 Å beträgt.

4. Wärmeabschirmendes Beschichtungsmaterial nach Anspruch 2, wobei der mittlere Ionenradius von Ln weniger als 1,04 Å beträgt.

5. Gerätekomponente, die das wärmeabschirmende Beschichtungsmaterial nach einem der Ansprüche 1 bis 4 umfasst.

## Revendications

1. Matériau de revêtement de barrière thermique, consistant en un composé représenté par une formule de composition (1) :
Ln₁₋ₓTaₓO_{1,5+x}
dans laquelle 0,18 ≤ x ≤ 0,22, et Ln représente un ou plusieurs éléments choisis dans le groupe constitué par Sc, Y et des éléments lanthanoïdes.

2. Matériau de revêtement de barrière thermique, consistant en un composé représenté par une formule de composition (2) .
Ln₁₋ₓNbₓO_{1,5+x}
dans laquelle 0,18 ≤ x ≤ 0,22, et Ln représente un ou plusieurs éléments choisis dans le groupe constitué par Sc, Y et des éléments lanthanoïdes.

3. Matériau de revêtement de barrière thermique selon la revendication 1, dans lequel un rayon ionique moyen de Ln est inférieur à 1,04 Å.

4. Matériau de revêtement de barrière thermique selon la revendication 2, dans lequel un rayon ionique moyen de Ln est inférieur à 1,04 Å.

5. Composant d'équipement, comprenant le matériau de revêtement de barrière thermique selon l'une quelconque des revendications 1 à 4.
